# EUROPEAN PATENT APPLICATION

(11) **EP 0 899 728 A1**
(43) Date of publication of application: **03.03.1999**
(21) Application number: 98306498.1
(22) Date of filing: 14.08.1998
(51) Int. Cl.: G11B 15/60, G11B 15/46, G11B 15/18

(54) **Magnetic recording and reproducing apparatus and method thereof**

(30) Priority: 23.08.1997 JP 242029/97
(71) Applicant: VICTOR COMPANY OF JAPAN, LTD., Yokohama-Shi, Kanagawa-Ken (JP)
(72) Inventor: Hirohata, Naoto, Yokohama-shi, Kanagawa-ken (JP); Kinjo, Hisao, Yokohama-shi, Kanagawa-ken (JP); Mizuno, Yoshio, Kamakura-shi, Kanagawa-ken (JP)
(74) Representative: Crawford, Andrew Birkby

(57) **Abstract**

A magnetic recording and reproducing apparatus has a rotary drum on which a first, a second, a third and a fourth rotary magnetic head are arranged so that the first and second heads scan a magnetic tape while travelling in a forward direction, and the third and fourth heads scan the tape while travelling in a reverse direction. The first and second heads have a magnetic gap with an azimuth angle of 90 degrees or less in a clockwise direction with respect to a track width on the tape. The third and fourth heads have a magnetic gap with an azimuth angle of 90 degrees or less in an anti-clockwise direction with respect to the track width. Data is recorded with pilot signals on first tracks of the tape by the first and second heads with un-recorded areas each between adjacent two of the first tracks while the tape is travelling in the forward direction. Each un-recorded area has a width substantially equal to a width of each first track. Data is recorded on second tracks corresponding to the un-recorded areas by the third and fourth heads while the tape is travelling in the reverse direction. The recording is controlled so that data is recorded on at least a portion of each un-recorded area by the third and fourth heads in an initial recording while the tape is travelling in the forward direction. The heads are controlled to scan the tracks in reproduction while the tape is travelling in the forward or the reverse direction based on the pilot signals recorded on the tracks.

## Description

### BACKGROUND OF THE INVENTION

The present invention relates to a helical scanning-type magnetic recording and reproducing apparatus and method thereof. Particularly, this invention relates to a home-use helical scanning-type digital video tape recorder (VCR) for reciprocal (forward and reverse) recording and reproduction.

A home-use digital VCR employs automatic tracking finding (ATF). The ATF system records digital data of a main signal, such as, video and audio signals, interposed with tracking pilot signals on a magnetic tape by means of rotary magnetic heads provided on an upper rotary drum of a drum assembly. Tracking control is performed by comparing crosstalk components of pilot signals reproduced from tracks located on both sides of a main signal track.

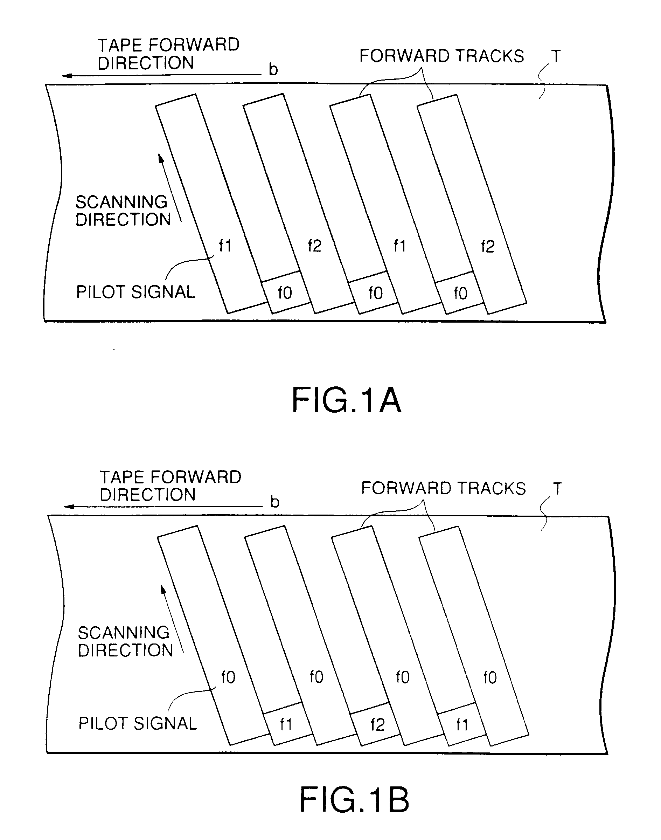

In detail, formed on both sides of a track on which no pilot signal is recorded are a track on which a pilot signal of frequency f1 is recorded and another track on which a pilot signal of frequency f2 is recorded. This track arrangement can be illustrated as shown in FIGS. 1A and 1B where the two types of tracks are alternatively arranged for every second track between a track on which no pilot signal is recorded (indicated as f0).

Crosstalk components of the pilot signals of frequencies f1 and f2 are reproduced from these tracks by means of rotary magnetic heads while scanning the track on which no pilot signal is recorded. The rotary magnetic heads have a head track width wider than that of the tracks. Tracking control is carried out so that the reproduced crosstalk levels are equal to each other for accurate track control by the rotary magnetic heads.

The signal recorded on a track by the ATF system has a format divided, as shown in FIG. 2A, into an insert data area (insert and track information area ITI), an audio signal area (AUDIO), a video signal area (VIDEO), a subcode area (SUBCODE), and so on. Margins (not shown) are provided on both end portions of each track. Furthermore, a gap is provided between two of the areas, such as between the VIDEO and AUDIO areas.

Furthermore, a switching timing reference signal is recorded on the ITI area. The switching timing reference signal is to switch the ITI, AUDIO, VIDEO and SUBCODE areas, for example, for after-recording of data on these areas. The VIDEO area only, for example, can be set in a recording mode by means of the switching timing reference signal. Furthermore, tracking control can be carried out in after-recording edition by means of a pilot signal in the ITI area.

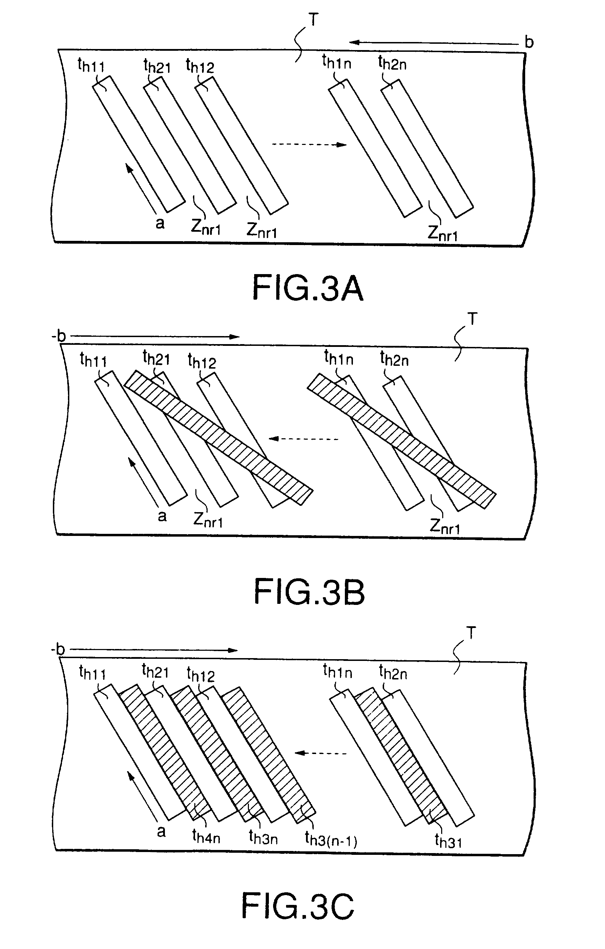

Reciprocating recording by a helical scanning-type magnetic recording and reproducing apparatus is illustrated in FIGS. 3A to 3C.

Tracks shown in FIG. 3C are formed as follows:

Tracks shown in FIG. 3A are formed first with gaps corresponding to at least one track width while a magnetic tape T is travelling in a forward direction "b". Next, other tracks indicated by oblique lines in FIG. 3B are formed while the magnetic tape T is travelling in a reverse direction "-b". In detail, tracks indicated by oblique lines in FIG. 3B are recorded on the gaps formed in the forward recording by means of rotary magnetic heads where rotary loci of the magnetic heads do not match an angle of the tracks shown in FIG. 3A.

There are two disadvantages in the reciprocating recording shown in FIGS. 3A and 3B under the ATF system.

The ATF system requires that, for example, as shown in FIGS. 1A and 1B, the two pilot signals of frequencies f1 and f2 be reproduced in a reproduction operation.

However, one non-recorded area exists between two tracks formed in the first forward recording by the helical scanning-type magnetic recording and reproducing apparatus as shown in FIG. 3A. This results in no crosstalk components being reproduced for tracking control if reproduction is carried out just after the first forward recording.

The other disadvantage is that crosstalk components cannot be reproduced well in reverse reproduction by a helical scanning-type magnetic recording and reproducing apparatus. Because the head track width of rotary magnetic heads for reverse reproduction is equal to the track width for reverse recording in helical scanning. Thus, for example, in FIG. 1A, cross talk components cannot be reproduced well from the pilot signals of frequencies f1 and f2 while the rotary magnetic heads are scanning the tracks of no pilot signal (f0).

Rotary magnetic heads for tracking only with a head track width wider than that of the rotary heads for recording and reproduction may be provided for solving the problems. However, such rotary heads for tracking only require much space and hence cannot meet the demands for compactness and low cost for production.

### SUMMARY OF THE INVENTION

A purpose of the present invention is to provide a magnetic recording and reproducing apparatus and a method thereof whereby crosstalk components are always reproduced from tracks by rotary magnetic heads with the same head track width.

The present invention provides a magnetic recording and reproducing apparatus comprising: a first and a second rotary magnetic head having a magnetic gap with an azimuth angle of 90 degrees or less in a clockwise direction with respect to a track width on a magnetic tape; a third and a fourth rotary magnetic head having a magnetic gap with an azimuth angle of 90 degrees or less in an anti-clockwise direction with respect to the track width; a rotary drum on which the first and second rotary magnetic heads are arranged so that the first and second rotary magnetic heads scan the magnetic tape while the magnetic tape is travelling in a first direction, and the third and fourth rotary magnetic heads are arranged so that the third and fourth rotary magnetic heads scan the magnetic tape while the magnetic tape is travelling in a second direction that is a reversal of the first direction; recording means for recording data with pilot signals on first tracks of the magnetic tape by the first and second rotary magnetic heads with un-recorded areas each between adjacent two of the first tracks while the magnetic tape is travelling in the first direction, each un-recorded area having a width substantially equal to at least a width of each first track, and for recording data on second tracks corresponding to the un-recorded areas by the third and fourth rotary magnetic heads while the magnetic tape is travelling in the second direction; first controlling means for controlling the recording means so that data is recorded on at least a portion of each un-recorded area by the third and fourth rotary magnetic heads in an initial recording while the magnetic tape is travelling in the first direction; and second controlling means for controlling the rotary magnetic heads to scan the tracks in reproduction while the magnetic tape is travelling in the first or the second direction based on the pilot signals recorded on the tracks.

Furthermore, the present invention provides a method of recording data on and reproducing data from a magnetic tape, the method comprising the steps of: recording data on first tracks on the magnetic tape with un-recorded areas each between adjacent two of the first tracks in an initial recording while the magnetic tape is travelling in a specific direction; recording data with pilot signals on at least a portion of each un-recorded area in the initial recording while the magnetic tape is travelling in the specific direction; and reproducing the data from the first tracks based on the pilot signals recorded on the portion of each un-recorded area.

### BRIEF DESCRIPTION OF DRAWINGS

FIGS. 1A and 1B illustrate pilot signals recorded on a magnetic tape;
FIGS. 2A to 2C illustrate tracks recorded on a magnetic tape in reciprocating recording;
FIGS. 3A to 3C illustrate tracks recorded on a magnetic tape in reciprocating recording;
FIG. 4 is a block diagram of a magnetic recording and reproducing apparatus according to the present invention;
FIG. 5 is a block diagram of an ATF circuit 4 shown in FIG. 4;
FIG. 6 illustrates a drum slant mechanism;
FIG. 7 also illustrates the drum slant mechanism;
FIGS. 8A and 8B illustrate an arrangement of rotary magnetic heads;
FIGS. 9A and 9B illustrate an arrangement of rotary magnetic heads according to another embodiment;
FIG. 10 is a block diagram of a head switching circuit 7 shown in FIG. 4;
FIG. 11 illustrates signals recorded on a magnetic tape in reciprocating recording;
FIG. 12 is a timing chart for explaining switching timing among the first forward, first reverse, and second forward recording; and
FIGS. 13A to 13C illustrate tracks recorded on a magnetic tape in reciprocating recording according to another embodiment.

### DETAILED DESCRIPTION OF PREFERRED EMBODIMENTS

Preferred embodiments according to the present invention will be described with reference to the attached drawings. Elements that are the same or analogous to each other are referenced by the same reference signs and numerals through the drawings.

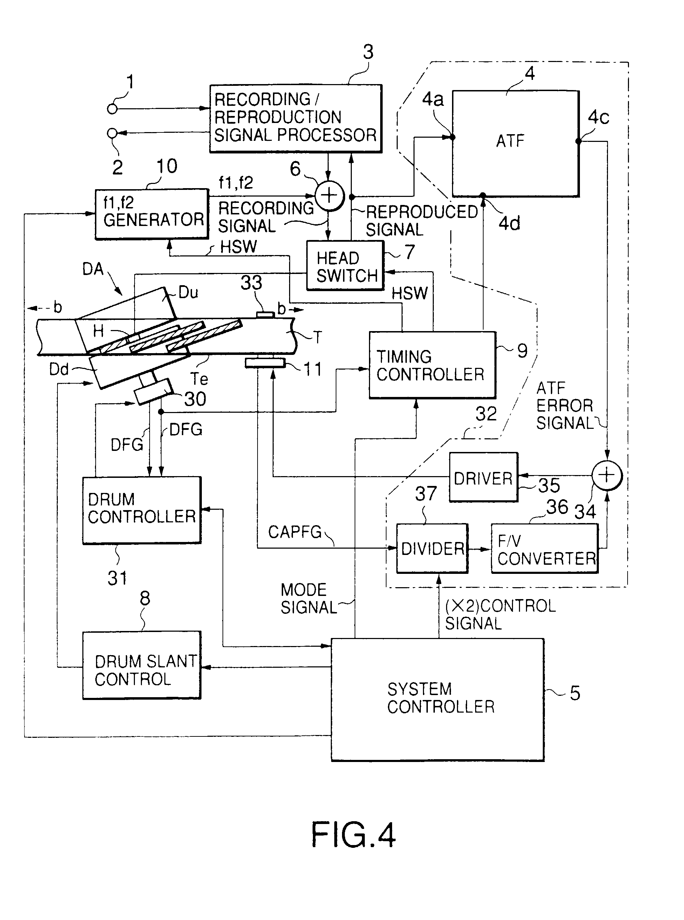

FIG. 4 is a block diagram of a preferred embodiment of a magnetic recording and reproducing apparatus according to the present invention.

An analog input signal to be recorded, such as, a video and an audio signal, is supplied to a recording and reproducing signal processor 3 via an input terminal 1.

The signal processor 3 converts the analog signal into a digital signal and executes DCT block formation, DCT computation, quantization, variable-length coding, error correction code addition, and other necessary signal processing to the digital signal.

Furthermore, the signal processor 3 converts a format of the digital signal into another format divided into an insert data area, an audio signal area, a video signal area, a subcode area, and so on, for each track on a magnetic tape. The digital data (signal) with the converted format is supplied to an adder 6 with a reciprocating recording identification signal.

The signal processor 3 may be of a type to generate signals in an SD and HD mode under the DVC standard. Furthermore, when an input signal is a digital signal, the signal processor 3 does not need to convert the input signal into a digital signal.

A pilot signal generator 10 generates pilot signals of frequencies f1 and f2, and supplies them to the adder 6. The adder 6 adds the pilot signals to the digital data to form a recording signal (signal to be recorded).

The recording signal is supplied to rotary heads H via a head switching circuit 7. The head switching circuit 7 is controlled by a head switching control signal (HSW) supplied from a timing controller 9 so that the recording signal is supplied to a specific rotary head among the rotary heads H.

A system (main) controller 5 supplies control signals, according to input data from terminal equipment (not shown) to the timing controller 9, a drum controller 31, a magnetic tape travel speed and phase controller (capstan controller) 32, a drum slant controller 8 (with a slant control mechanism), and so on. The capstan controller 32 controls a magnetic tape T at a specific travel speed in a forward direction "b" or a reverse direction "-b" for forward or reverse recording.

The drum slant controller 8 controls a rotary head H to make its center angle slants so that an angle between its rotary locus and a reference edge of the magnetic tape is equal to a reference track angle on the magnetic tape while travelling in the forward or reverse direction.

A signal reproduced by the rotary magnetic head H is supplied to the signal processor 3 via the head switching circuit 7. The signal processor 3 applies waveform equalization, code detection and phase locking to the reproduced signal, which is thus converted into digital data. The digital data is then stored in a digital memory (not shown).

The digital data is read from the digital memory at a timing of a read enable signal supplied from the system controller 5. The digital data is then converted into a serial bit stream.

The signal processor 3 applies error correction, variable-length decoding and inverse-DCT to the serial bit stream. The serial bit stream is then stored in a frame memory (not shown). The serial bit stream is read from the frame memory and output via an output terminal 2.

The signal reproduced by the rotary magnetic head H is also supplied to an ATF circuit 4 via the head switching circuit 7.

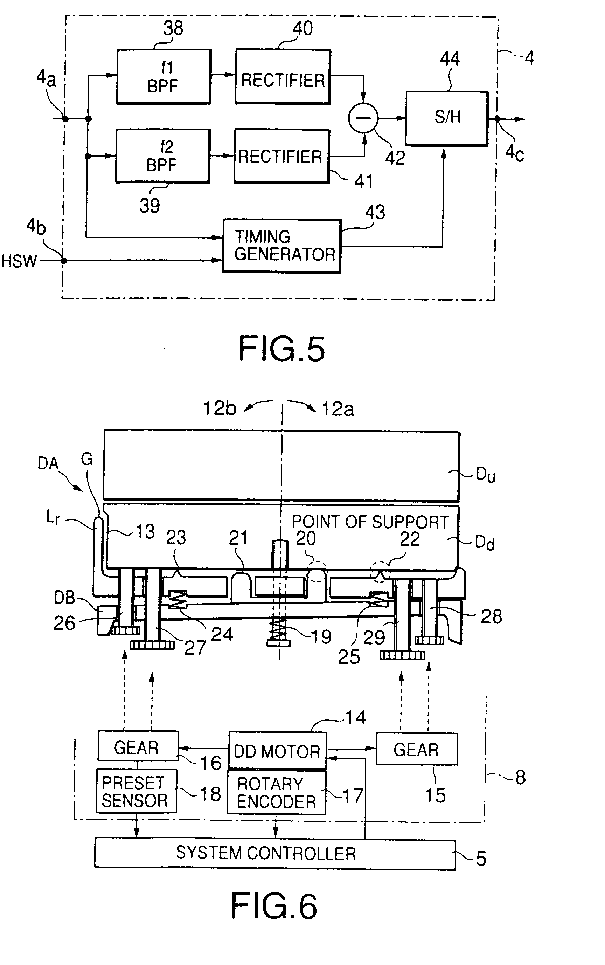

FIG. 5 is a block diagram of the ATF circuit 4.

The reproduced signal supplied to the ATF circuit 4 via an input terminal 4a is supplied to a band-pass filter (BPF) 38 to pick up a first pilot signal of frequency f1. The first pilot signal is detected and rectified by a rectifier 40 and supplied to a subtracter 42.

The reproduced signal is also supplied to another band-pass filter (BPF) 39 to pick up a second pilot signal of frequency f2. The second pilot signal is detected and rectified by a rectifier 41 and supplied to the subtracter 42.

The first pilot signal is subtracted from the second pilot signal by the subtracter 42 to generate an ATF error signal (tracking error signal). The ATF error signal is output from an output terminal 4c via a sample hold circuit (S/H) 44. The S/H circuit 44 is controlled by a pilot sampling signal supplied from a timing generator 43. The timing generator 43 generates the pilot sampling signal on the basis of the reproduced signal and a timing signal HSW supplied from the timing controller 9 (FIG. 4). The output ATF error signal is then supplied to an adder 34 of the capstan controller 32 (FIG. 4) as a phase control signal.

The capstan controller 32 also includes a driver 35, an frequency-to-voltage (F/V) converter 36 and a divider 37 as shown in FIG. 4.

The divider 37 divides an output signal CAPFG of a frequency generator (not shown) attached to a rotary shaft of a capstan motor 11 that drives a capstan 33. This frequency division is performed to make a magnetic tape T travel at a speed two times the normal speed in reciprocating recording or reproduction in response to a (x 2) control signal from the system controller 5. The divided signal CAPFG divided at the divider 37 is supplied to the F/V converter 36 and converted into a speed control signal.

The speed control signal is added to the ATF error signal by the adder 34. An output signal of the adder 34 is supplied to the driver 35. An output signal of the driver 35 is then supplied to the capstan motor 11 to control the magnetic tape T pinched by the capstan 33 and a pinch roller (not shown) so that it travels at a specific speed and phase. The operation described so far forms the tracks as shown in FIG. 3A.

According to the description made so far, reciprocal recording and reproduction cannot be performed because, as shown in FIG. 3B, the rotary locus of the rotary magnetic head H while the magnetic tape T is travelling in the forward direction is different from that while travelling in the reverse direction.

It is thus essential that an angle between the rotary locus of the magnetic head H and a reference edge of the magnetic tape T while travelling in the forward direction, and another angle between the rotary locus of the magnetic head H and the reference edge while travelling in the reverse direction are always equal to a specific track angle for reciprocal recording or reproduction.

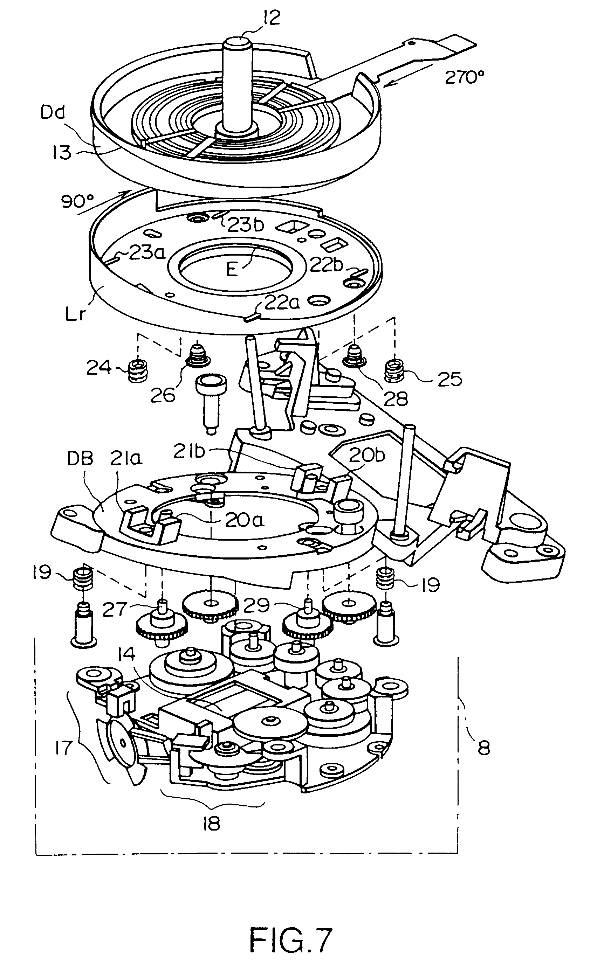

This angle adjustment is carried out by the system controller 5, the drum slant controller 8, and its mechanism as shown in FIGS. 6 and 7.

In FIG. 6, a drum assembly DA that consists of an upper drum Du, a lower drum Dd and a lead ring Lr, is supported by a drum base DB. The upper drum Du is rotatably supported around a center shaft 12 of the drum assembly DA with a bearing (not shown) attached to the center shaft 12. On the other hand, the lower drum Dd is fixed to the center shaft 12.

The upper drum Du is rotated by a drum motor 30 (FIG. 4) that generates drum FG and PG signals. The drum FG and PG signals are supplied to the drum controller 31, which then supplies a signal indicating their difference to the system controller 5. The system controller 5 supplies a drum control signal to the drum controller 31. The drum controller 31 controls the drum motor 30 in response to the drum control signal.

The lead ring Lr as a guide for a reference edge Te (FIG. 4) of the magnetic tape T is provided as separated from the lower drum Dd. The lead ring Lr is rather provided as coaxial with a lower protrusion of the lower drum Dd with a knife edge E formed at the inner surface of the lead ring Lr as shown in FIG. 7.

The drum slant controller 8 includes, as shown in FIGS. 6 and 7, a slant drive motor (DD motor) 14 with a motor drive controller (not shown), deceleration gear mechanisms 15 and 16, a rotary encoder 17, and a positional detector (preset sensor) 18.

The positional detector 18 may have a light emitting and a receiving device with a circular shading blade that is rotatable between the two devices. The positional detector 18 in this arrangement outputs a signal just when the circular shading blade leaves a light travel passage from the light emitting device to the light receiving device. The output signal may indicate a reference position of the center shaft 12 or the lead ring Lr.

A rotational amount of the circular shading blade from its reference position can be detected by counting the number of pulses output from the rotary encoder 17. This provides a direction or an amount of deviation of the drum assembly DA from the center shaft 12 or the lead ring Lr from its reference position.

The system controller 5 supplies control data to the drum slant controller 8 in accordance with an operating mode of a predetermined travel direction and speed of the magnetic tape T. The drum slant controller 8 then moves screws 27 and 29 up and down so that the center shaft 12 slants in a direction indicated by an arrow 12a or 12b.

The lead ring Lr also slants by an amount in a specific direction under the control of the drum slant controller 8. This provides an adequate slant adjustment where tracks recorded on the magnetic tape T have a predetermined track angle without respect to a tape travel direction and also yields a match between a travel locus of the reference edge Te of the magnetic tape T and a guide surface G of the lead ring Lr.

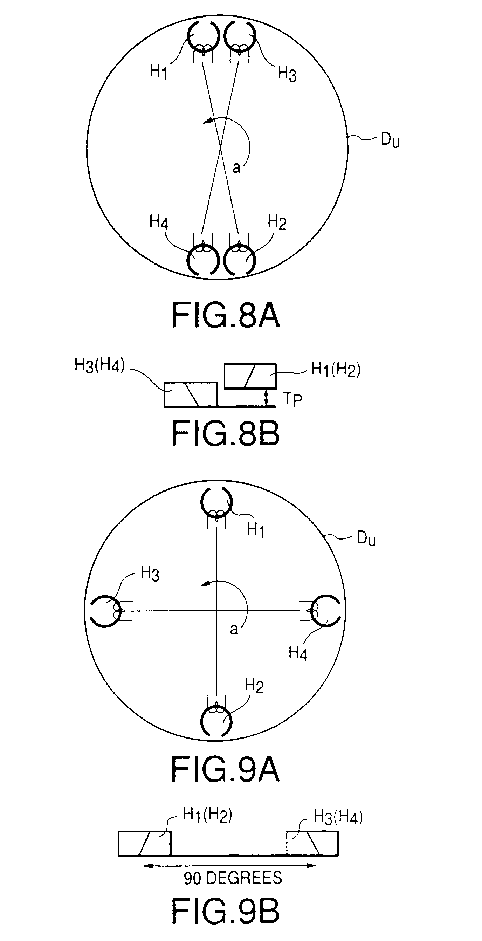

As shown in FIGS. 6 and 7, the lower drum Dd is supported by four points of supports 20a, 20b, 21a and 21b, and the lead ring Lr is supported by four points of supports 22a, 22b, 23a and 23b when tracks are recorded on the magnetic tape T while travelling in the forward direction "b" (FIG. 4) at a predetermined travelling speed by the rotary magnetic heads rotating in the direction "a" at a predetermined rotary speed as shown in FIGS. 8A and 8B, and 9A and 9B.

Springs 19 are provided between the drum base DB and the lower drum Dd, and springs 24 and 25 are provided between the lead ring Lr and the drum base DB to couple them to each other.

In forward recording, the screws 27 and 29 are driven by the drum slant controller 8 so that the screw 27 pushes up the bottom surface of the lower drum Dd, whereas the screw 29 leaves therefrom, to make the two points of support 20a and 20b touch the bottom surface of the lower drum Dd. The center shaft 12 thus rotates in the direction 12a (FIG. 6) with the points of support 20a and 20b as rotary points of support.

Furthermore, in the forward recording, screws 26 and 28 provided as screwed into the lead ring Lr and touching the lower surface of the lower drum Dd (FIGS. 6 and 7) are driven by the drum slant controller 8 in directions opposite to each other, to make the two points of support 22a and 22b touch the bottom surface of the lower drum Dd. The center shaft 12 thus rotates in the direction 12a (FIG. 6) with the points of support 22a and 22b as rotary points of support.

On the other hand, in reverse recording or reproduction, the screws 27 and 29 are driven by the drum slant controller 8 so that the screw 29 pushes up the bottom surface of the lower drum Dd, whereas the screw 27 leaves therefrom to make the two points of support 21a and 21b touch the bottom surface of the lower drum Dd. The center shaft 12 thus rotates in the direction 12b (FIG. 6) with the points of support 21a and 21b as rotary points of support.

Furthermore, in the reverse recording or reproduction, the screws 26 and 28 are driven by the drum slant controller 8 in directions opposite to each other, to make the two points of support 23a and 23b touch the bottom surface of the lower drum Dd. The center shaft 12 thus rotates in the direction 12b (FIG. 6) with the points of support 23a and 23b as rotary points of support.

The screws 26 and 27 are simultaneously driven by the same mechanism, and the screws 28 and 29 are simultaneously driven by the other same mechanism. Thus, the driving operation to the screws 27 and 29 for the drum assembly slanting movement and that to the screws 26 and 28 for the lead ring slanting movement can be carried out simultaneously.

As described above, the drum assembly and lead ring slanting movement yields a match between the rotary locus of the rotary magnetic heads and the tracks, and accurate guiding of the reference edge Te of the magnetic tape T by means of the guide surface G of the lead ring Lr.

The angle between the rotary locus of the rotary magnetic heads and the reference edge Te of the magnetic tape T thus can be always equal to a reference track angle while the magnetic tape T is travelling in a forward or reverse direction in reciprocating recording or reproduction.

FIGS. 8A to 9B illustrate rotary magnetic head arrangements.

The first rotary magnetic head H1 has a magnetic gap with an azimuth angle of 90 degrees or less in a clockwise direction to a track width. And, the second rotary magnetic head H2 has a magnetic gap with the same azimuth angle as the first rotary magnetic head H1. The rotary magnetic heads H1 and H2 are arranged so that they are placed at diagonally opposite positions with the diagonal passing through the drum center (12) at the same height on the upper drum Du.

The third rotary magnetic head H3 has a magnetic gap with an azimuth angle of 90 degrees or less in an anti-clockwise direction to a track width. And, the fourth rotary magnetic head H4 has a magnetic gap with the same azimuth angle as the third rotary magnetic head H3. The rotary magnetic heads H3 and H4 are arranged so that they are placed at diagonally opposite positions with the diagonal passing through the drum center (12) at the same height on the upper drum Du.

In FIGS. 8A and 8B, the rotary magnetic heads H1 and H3 are provided on the upper drum Du with a minute gap (distance) therebetween at heights with a difference Tp which is a width of tracks to be recorded. The rotary magnetic heads H2 and H4 are also provided on the upper drum Du with the gap at heights with the difference Tp.

On the other hand, as shown in FIGS. 9A and 9B, the rotary magnetic heads H1 and H2 are arranged so that they are placed at diagonally opposite positions with the diagonal passing through the drum center at the same height on the upper drum Du. The rotary magnetic heads H3 and H4 are also arranged so that they are placed at diagonally opposite positions with the diagonal passing through the drum center at the same height on the upper drum Du. The rotary magnetic heads H1 and H2, and H3 and H4 have 90 degree-angular relationship around the drum center.

In forward recording or reproduction with the rotary magnetic heads arranged as shown in FIGS. 8A to 9C, the capstan controller 32 performs control in response to a control signal from the system controller 5 so that the magnetic tape T travels in the forward direction "b" shown in FIG. 4 at a specific speed. The speed is two times faster than a travel speed for forming tracks tightly close to each other by means of two rotary magnetic heads, such as the first and second heads H1 and H2. Furthermore, the drum slant controller 8 performs positional control to the rotary loci of the rotary magnetic heads in response to another control signal from the system controller 5 so that an angle between the rotary loci of the rotary magnetic heads and the reference edge Te of the magnetic tape T becomes a specific track angle.

The third and fourth heads H3 and H4 will be used for the reverse recording or reproduction when the first and second heads H1 and H2 are used for the forward recording or reproduction as described above. On the other hand, when the third and fourth heads H3 and H4 are used for the forward recording or reproduction, the first and second heads H1 and H2 will be used for the reverse recording or reproduction.

The tracks formed by the forward and reverse recording are illustrated in FIGS. 3A and 3C.

In FIG. 3A, the tracks th11 → th12 → ··· → th1n are formed in the forward recording by the first rotary magnetic head H1, and the tracks th21 → th22 (not shown) → ··· → th2n are formed by the second rotary magnetic head H2. There is the un-recorded area Znr1 between the tracks, such as, the tracks th11 and th21.

In FIG. 3C, the tracks th31 → ··· → th3(n - 1) → th3n are formed in the reverse recording by the third rotary magnetic head H3, and the track th4n is formed by the fourth rotary magnetic head H4 on the un-recorded area Znr1 of FIG. 3A.

The tracking control for the first forward recording shown in FIG. 3A requires no pilot signal because of the un-recorded area Znr1. On the other hand, the tracking control for the first reverse recording shown in FIG. 3C after the first forward recording requires pilot signals recorded with the tracks in the forward recording. Otherwise, the tracks shown in FIG. 3C cannot be formed.

For this reason, as shown in FIG. 2A, tracks (ITI tracks) are formed by the third rotary magnetic head H3 in the forward recording next to the tracks already formed by the first rotary magnetic head H1 in the first forward recording (FIG. 2A). The reverse recording is carried out for a period the same as that for the forward recording or a period corresponding to a portion of the period for the forward recording.

Furthermore, tracks (ITI tracks) are formed by the fourth rotary magnetic head H4 next to the tracks already formed by the second rotary magnetic head H2.

In the forward recording, a signal is recorded by the first and second magnetic heads H1 and H2, which is constituted by the insert data area (insert and track information area ITI), the audio signal area (AUDIO), the video signal area (VIDEO) and the subcode area (SUBCODE).

Also in the forward recording, another signal is recorded by the third and fourth magnetic heads H3 and H4, which is constituted by the insert data area ITI only (ITI tracks).

The forward recording are switched by the head switching circuit 7.

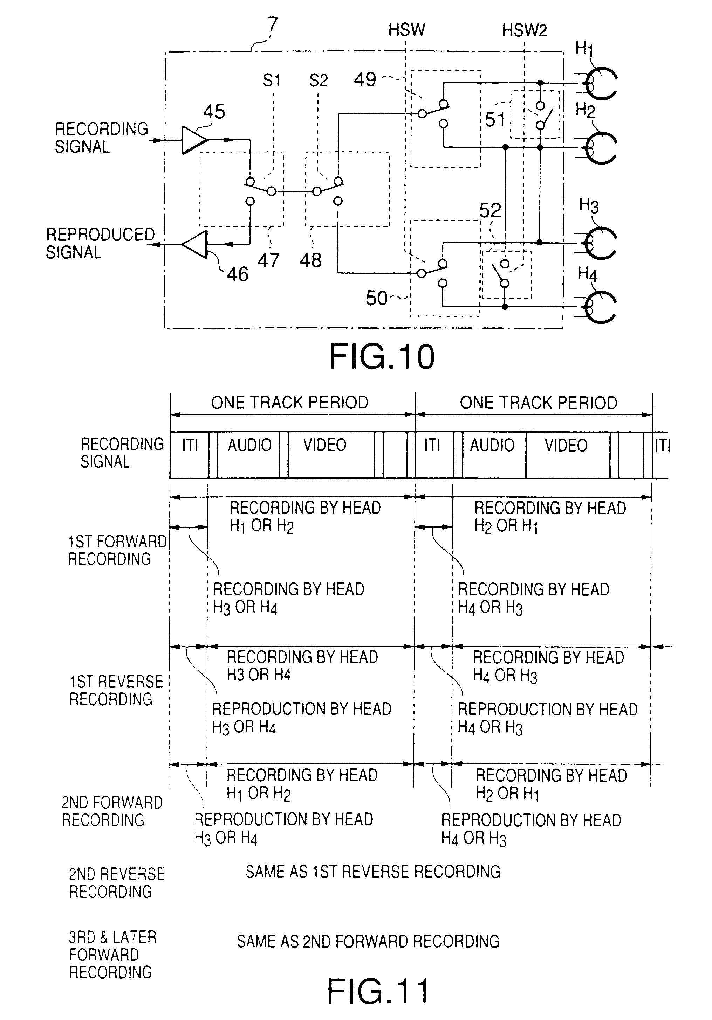

Operation of the head switching circuit 7 will be described with reference to FIGS. 10 to 12.

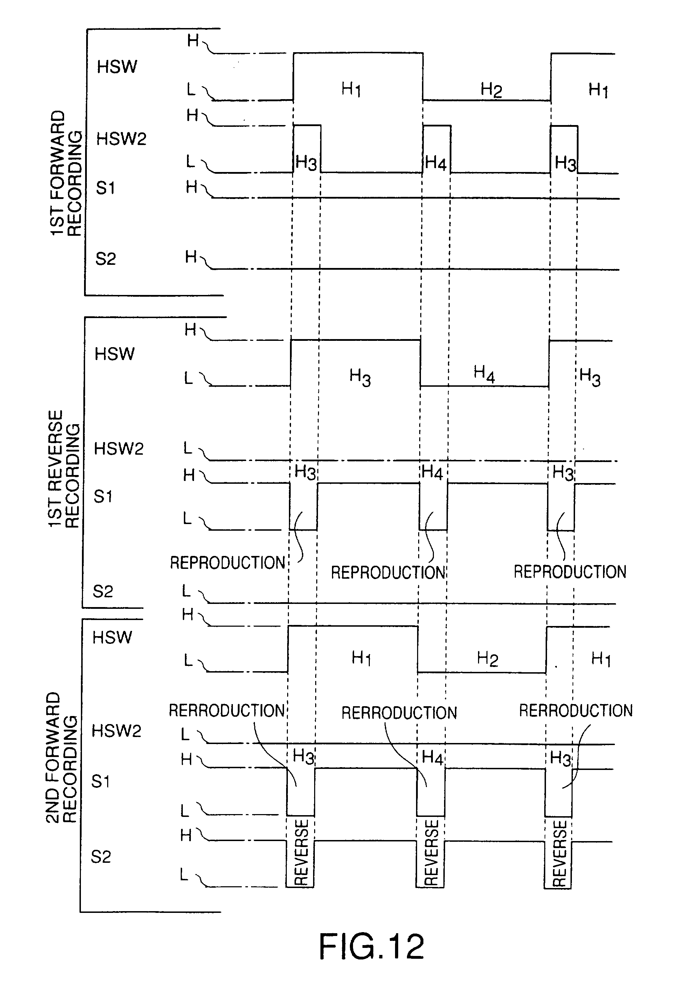

A head switching signal HSW (FIGS. 10 and 12) with a cycle corresponding to one rotation of drum is supplied from the timing controller 9 to the head switching circuit 7 to control head switches 49 and 50 shown in FIG 10.

The head switch 49 selects the first rotary magnetic head H1 while the head switching signal HSW is high, whereas the second rotary magnetic head H2 while the signal HSW is low.

Furthermore, the head switch 50 selects the third rotary magnetic head H3 while the head switching signal HSW is high, whereas the fourth rotary magnetic head H4 while the signal HSW is low.

Another head switching signal HSW2 shown in FIGS. 10 and 12 is supplied from the timing controller 9 to the head switching circuit 7 to control switches 51 and 52 shown in FIG 10. The signal HSW2 turns on the switches 51 and 52 while the signal HSW2 is high to supply a signal to be recorded to the third and fourth rotary magnetic heads H3 and H4 only for the period corresponding to the insert data area ITI (FIG. 11).

A switching control signal S1 shown in FIG. 12 is supplied from the timing controller 9 to a recording/reproduction switch 47. In recording, the switch 47 selects a recording amplifier 45 while the switching control signal S2 is high. On the other hand, in reproduction, the switch 47 selects a reproduction amplifier 46 while the signal S2 is low.

A switching control signal S2 shown in FIG. 12 is supplied from the timing controller 9 to a forward/reverse direction switch 48. The switch 48 selects the head switch 49 for forward recording or reproduction while the signal S1 is high. On the other hand, the switch 48 selects the head switch 50 for reverse recording or reproduction while the signal S1 is low.

The control signals shown in FIG. 12 are generated by the timing controller 9 in response to mode signals supplied from the system controller 5.

In the first forward recording, the tracks shown in FIG. 2A are formed by the third and fourth heads H3 and H4, and the first and second heads H1 and H2 (FIG. 11) according to the timing shown in FIG. 12 given by the head switching circuit 7.

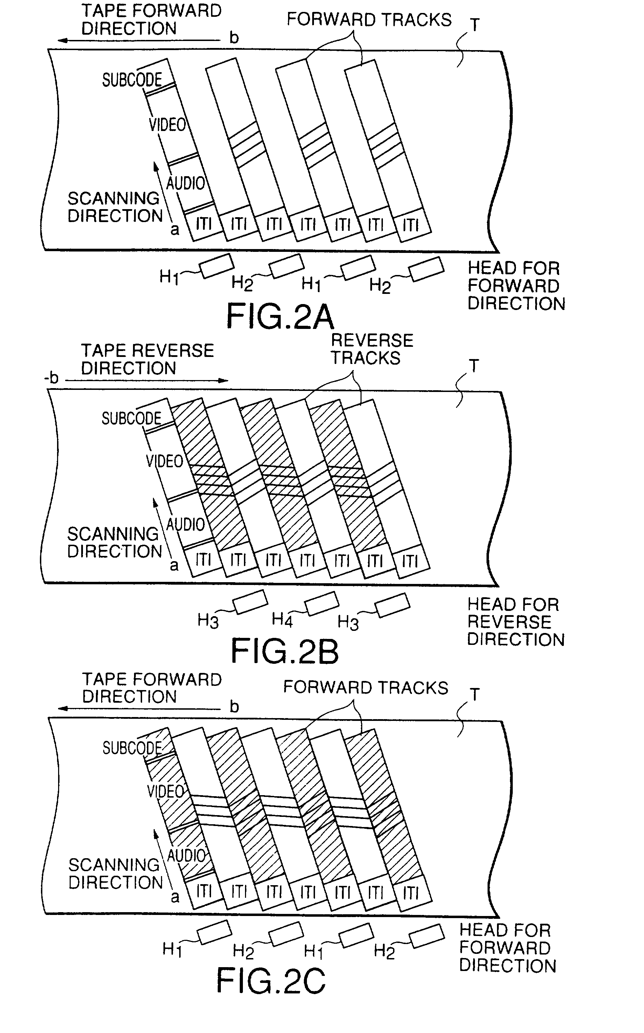

In the first reverse recording following the first forward recording, tracks indicated by oblique lines in FIG. 2B are formed by the third and fourth heads H3 and H4 (FIG. 11) according to the timing shown in FIG. 12 given by the head switching circuit 7.

Next, in the second forward recording, tracks indicated by oblique lines in FIG. 2C are formed by the first and second heads H1 and H2 (FIG. 11) according to the timing shown in FIG. 12 given by the head switching circuit 7. The second forward recording is performed under the tracking control with the pilot signals reproduced by the third and fourth heads H3 and H4 (FIG. 11).

The control operation of the head switching circuit 7 shown in FIG. 12 in the first reverse recording to the third and fourth heads H3 and H4 is also applied to the second and later reverse recording or reproduction (FIG. 11).

Furthermore, the control operation of the head switching circuit 7 shown in FIG. 12 in the second forward recording to the first and second heads H1 and H2 is also applied to the third and later forward recording or reproduction (FIG. 11).

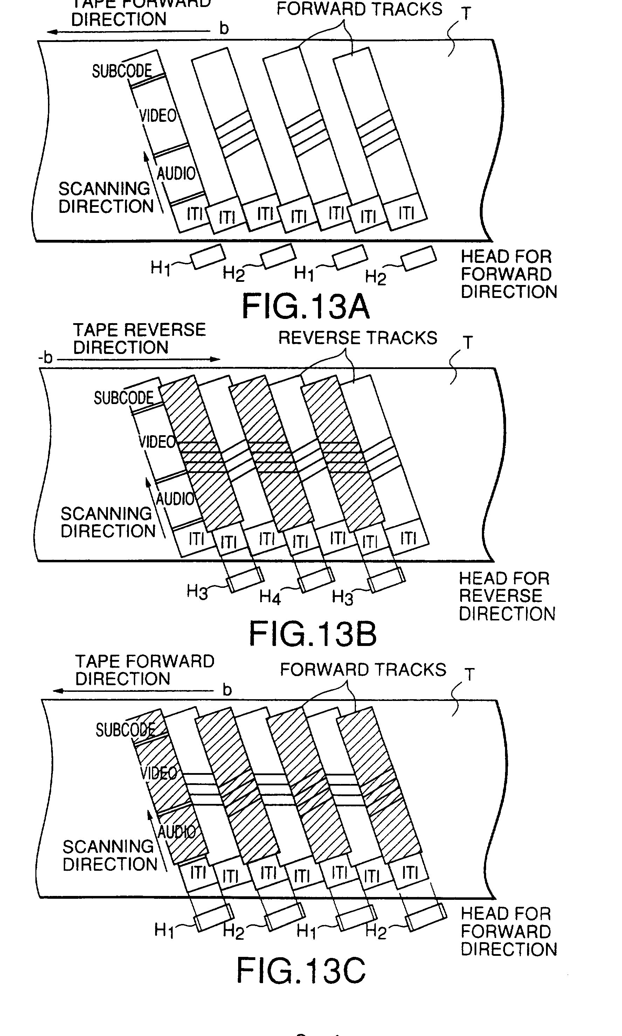

The tracks shown in FIGS. 2A to 2C are formed by rotary magnetic heads with a head track width equal to the track width. On the other hand, tracks shown in FIGS. 13A to 13C are formed by rotary magnetic heads with a head track width wider than the track width. The tracks shown in FIGS. 13A, 13B and 13C are formed in the first forward, the first reverse and the second forward recording, respectively.

A tape end or a folded position of the magnetic tape T is detected by an optical detector or a detector to detect an end or a folded position indicating signal recorded on the tape. The detected tape end or folded position is informed to the system controller 5.

The system controller 5 supplies a control signal to the drum slant controller 8 to vary rotary loci of the rotary magnetic heads so that the loci match a specific track angle in the forward recording or reproduction.

The system controller 5 also supplies a control signal to the capstan controller 32 to make the magnetic tape T travel in the reverse direction "-b" at a specific speed for the reciprocal recording or reproduction.

As described above, according to the present invention, a magnetic recording and reproducing apparatus has a rotary drum on which a first, a second, a third and a fourth rotary magnetic head are arranged so that the first and second heads scan a magnetic tape while travelling in a forward direction, and the third and fourth heads scan the magnetic tape while travelling in a reverse direction.

The first and second rotary magnetic heads have a magnetic gap with an azimuth angle of 90 degrees or less in a clockwise direction with respect to a track width on the magnetic tape. On the other hand, the third and fourth heads have a magnetic gap with an azimuth angle of 90 degrees or less in an anti-clockwise direction with respect to the track width.

Data is recorded with pilot signals on first tracks of the magnetic tape by the first and second rotary magnetic heads with un-recorded areas each between adjacent two of the first tracks while the magnetic tape is travelling in the forward direction. Each un-recorded area has a width equal to at least a width of each first track.

Furthermore, data is recorded on second tracks corresponding to the un-recorded areas by the third and fourth rotary magnetic heads while the magnetic tape is travelling in the reverse direction.

The recording is controlled so that data is recorded on at least a portion of each un-recorded area by the third and fourth rotary magnetic heads in an initial recording while the magnetic tape is travelling in the forward direction.

The rotary magnetic heads are controlled to scan the tracks in reproduction while the tape is travelling in the forward or the reverse direction based on the pilot signals recorded on the tracks.

Therefore, crosstalk components are always reproduced from tracks by the rotary magnetic heads with the same head track width.

## Claims

1. A magnetic recording and reproducing apparatus comprising:
a first and a second rotary magnetic head having a magnetic gap with an azimuth angle of 90 degrees or less in a clockwise direction with respect to a track width on a magnetic tape;
a third and a fourth rotary magnetic head having a magnetic gap with an azimuth angle of 90 degrees or less in an anti-clockwise direction with respect to the track width;
a rotary drum on which the first and second rotary magnetic heads are arranged so that the first and second rotary magnetic heads scan the magnetic tape while the magnetic tape is travelling in a first direction, and the third and fourth rotary magnetic heads are arranged so that the third and fourth rotary magnetic heads scan the magnetic tape while the magnetic tape is travelling in a second direction that is a reversal of the first direction;
recording means for recording data with pilot signals on first tracks of the magnetic tape by the first and second rotary magnetic heads with un-recorded areas each between adjacent two of the first tracks while the magnetic tape is travelling in the first direction, each un-recorded area having a width substantially equal to at least a width of each first track, and for recording data on second tracks corresponding to the un-recorded areas by the third and fourth rotary magnetic heads while the magnetic tape is travelling in the second direction;
first controlling means for controlling the recording means so that data is recorded on at least a portion of each un-recorded area by the third and fourth rotary magnetic heads in an initial recording while the magnetic tape is travelling in the first direction; and
second controlling means for controlling the rotary magnetic heads to scan the tracks in reproduction while the magnetic tape is travelling in the first or the second direction based on the pilot signals recorded on the tracks.

2. The apparatus according to claim 1, wherein the second controlling means controls an angular relationship between the rotary magnetic heads and the magnetic tape so that an angle between rotary loci of the rotary magnetic heads and a reference edge of the magnetic tape is always equal to each other while the magnetic tape is travelling in the first or the second direction.

3. The apparatus according to claim 1, the data recorded on the first tracks in the initial recording while the magnetic tape is travelling in the first direction is divided at least into an insert data area, an audio signal area, a video signal area, and a subcode area.

4. The apparatus according to claim 1, the data recorded on each un-recorded area in the initial recording while the magnetic tape is travelling in the first direction has an insert data area.

5. The apparatus according to claim 1, the first and second rotary magnetic heads are placed on the rotary drum at diagonally opposite positions with a diagonal line connecting the first and second heads passing through a center of the rotary drum at a first same height, and the third and fourth rotary magnetic heads are placed on the rotary drum at diagonally opposite positions with a diagonal line connecting the third and fourth heads passing through the center of the rotary drum at a second same height, the third rotary magnetic head being placed at a position on the rotary drum so that the third head forms a track next to another track formed by the first head on the magnetic tape, and the fourth rotary magnetic head being placed at a position on the rotary drum so that the fourth head forms a track next to another track formed by the second head on the magnetic tape.

6. The apparatus according to claim 5, a difference between the first and the second height is equal to a width of each track.

7. A method recording data on and reproducing data from a magnetic tape, the method comprising the steps of:
recording data on first tracks on the magnetic tape with un-recorded areas each between adjacent two of the first tracks in an initial recording while the magnetic tape is travelling in a specific direction;
recording data with pilot signals on at least a portion of each un-recorded area in the initial recording while the magnetic tape is travelling in the specific direction; and
reproducing the data from the first tracks based on the pilot signals recorded on the portion of each un-recorded area.

8. The method according to claim 7, further comprising the step of recording data on the un-recorded areas while the magnetic tape is travelling in a direction that is a reversal of the specific direction.
